# EUROPEAN PATENT SPECIFICATION

(11) **EP 0 833 276 B1**
(45) Date of publication and mention of the grant of the patent: **07.06.2006**
(21) Application number: 97116989.1
(22) Date of filing: 30.09.1997
(51) Int. Cl.: G06K 15/00, G06K 17/00

(54) **Image forming apparatus and image forming system**
Bilderzeugungsgerät und -system
Système et appareil de formation d'images

(30) Priority: 30.09.1996 JP 25811696; 29.05.1997 JP 14014097
(43) Date of publication of application: 01.04.1998
(73) Proprietor: KYOCERA CORPORATION, Yamashina-ku, Kyoto-shi, Kyoto (JP)
(72) Inventor: Mori, Nobuyasu, c/o Kyocera Corp. Tokyo Yoga Offic, Tokyo (JP)
(74) Representative: Sajda, Wolf E.

(56) References cited:
- EP-A- 0 258 488
- EP-A- 0 544 598
- EP-A- 0 621 721
- EP-A- 0 622 757
- GB-A- 2 248 129
- US-A- 4 268 159
- US-A- 4 408 181
- US-A- 5 243 381
- PATENT ABSTRACTS OF JAPAN vol. 016, no. 543 (P-1451), 12 November 1992 & JP 04 205225 A (CANON INC), 27 July 1992
- PATENT ABSTRACTS OF JAPAN vol. 015, no. 396 (M-1166), 8 October 1991 & JP 03 162979 A (NEC DATA TERMINAL LTD), 12 July 1991
- PATENT ABSTRACTS OF JAPAN vol. 096, no. 001, 31 January 1996 & JP 07 244657 A (MATSUSHITA ELECTRIC IND CO LTD), 19 September 1995

## Description

### BACKGROUND OF THE INVENTION

### 1. Field of the Invention

This invention relates to an image forming apparatus, typified by printers, for receiving image data, which is printable data including characters, figures, symbols, lines or the like, from external machines, converting the received image data into a print image, and printing the image.

This invention relates to an image forming system comprising: an external machine, typified by personal computers, for preparing image data; and an image forming unit, typified by printers, for receiving image data from and the external machine, converting the received image data into a print image, and printing the image.

This invention relates to an image forming system comprising: an information processing unit, typified by a personal computer, for preparing image data; an image forming unit, typified by a printer, for receiving image data from the information processing unit, converting the received image data into a print image and printing the image; and a terminal adapter unit for executing speed conversion and protocol conversion and conducting wireless or wire data communication with external machines.

### 2. Conventional Art

Upon reception of image data from an external machine such as a personal computer or a host computer, a printer of a conventional image forming unit forms a print image based on the received image data and prints as many copies as instructed from the external machine, etc.

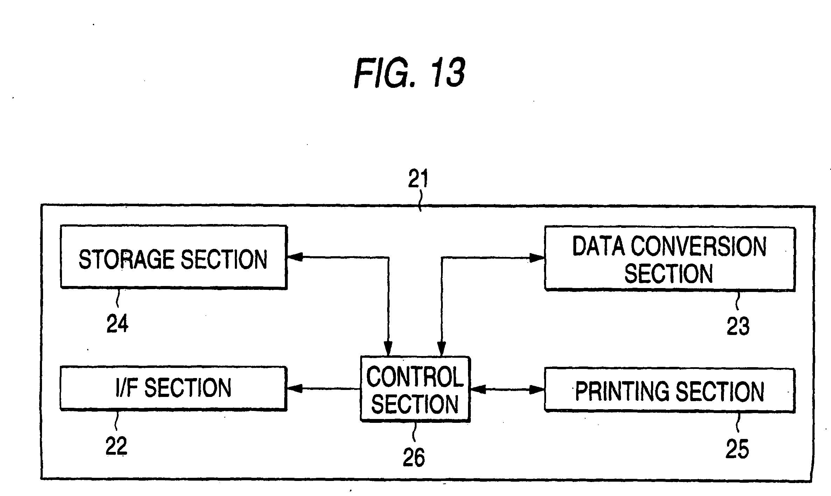

Figure 13 is a schematic block diagram to show a conventional image forming unit. An image forming unit 21 comprises an I/F section 22 for receiving image data from an external system, a data conversion section 23 for converting the image data received on the I/F section into print data, a storage section 24 for storing programs required for controlling the image forming unit 21, font data required for the data conversion section 23, and the like, a printing section 25 for printing the data from the data conversion section 23, and a control section 26 for controlling these sections.

However, after printing, the conventional image forming unit erases all data involved in the printing. Thus, to provide the same image, the print command must be again issued from the information processing unit. If the image data is not stored in a floppy disk, a hard disk, or the like, the printed paper must be copied by a copy machine. Alternatively, to make the best use of a high resolution, the print data must be again created from the beginning at the information processing unit.

EP 0 621 721 discloses an image forming apparatus for printing image data from an external device. A code is associated with each image to be printed, and when the code is selected, the corresponding image and code are printed upon the recording medium in the printing section. No disclosure is made, however, of providing network control means for accessing a further image forming device.

JP 08 050 598 and JP 08 016 605 both discuss an image forming apparatus for printing image data from an external device. Codes are associated with the images to be printed, such that with the selection of a code the stored print images can be printed. Neither document, however, associates a code with each page of the stored print data, so that it is not possible to select individual pages for printing.

### SUMMARY OF THE INVENTION

In view of the above problems, it is an object of the present invention to provide a image forming apparatus which is capable of repeatedly printing the same image with the same resolution in a short period of time.

According to the present invention, an image forming apparatus for printing image data from an external device is provided, which comprises the following features:
an identification code assignment section for assigning a respective identification code for each page unit of print images to be printed, wherein the identification code contains a serial number of the print images;
a printing section for printing the print images and a corresponding identification code on a recording medium for each page of the print images, wherein the corresponding identification code is printed on all pages of the recording medium;
a storage section for storing the print images and corresponding identification codes; an identification code read section adapted to read the identification code printed on the recording medium;
accessing means for taking out the print image corresponding to the identification code read through the identification code read section from the storage section, and for directing the print image and the identification code which are to be printed on an identical recording medium to the printing section;
network control means capable of accessing another image forming apparatus; and
read and output means capable of reading and outputting the print images stored in the other image forming apparatus, wherein the identification code contains a serial number of the image forming apparatus, and wherein a print image stored in the other image forming apparatus is read and printed when the serial number of the other image forming apparatus is contained in the identification code.

According to a further development of the apparatus according to the invention, the identification code is printed on a backface of each page of a recording medium to be printed.

### BRIEF DESCRIPTION OF THE DRAWINGS

In the accompanying drawings:
Figure 1 is a schematic block diagram to show an image forming apparatus according to the invention;
Figure 2 is a perspective view to show printer according to a first embodiment of the image forming apparatus of the invention;
Figure 3 is a block diagram to show a general configuration of the printer shown in Figure 2;
Figure 4 is a perspective view of printer according to a second embodiment to show the image forming apparatus of the invention;
Figure 5 is a perspective view to show printer according to a third embodiment of the image forming apparatus of the invention;
Figure 6 is a perspective view to show printer according to a fourth embodiment of the image forming apparatus of the invention;
Figure 7 is a block diagram to show a general configuration of the printer shown in Figure 6;
Figure 8 is a perspective view to show printer according to a fifth embodiment of the image forming apparatus of the invention;
Figure 9 is a perspective view to show printer according to a sixth embodiment of the image forming apparatus of the invention;
Figure 10 is a perspective view to show printer according to a seventh embodiment of the image forming apparatus of the invention;
Figure 11 is a block diagram to show a general configuration of the printer shown in Figure 10;
Figure 12 is a perspective view to show printer according to an eighth embodiment of the image forming apparatus of the invention; and
Figure 13 is a schematic block diagram to show a conventional image forming unit.

### DETAILED DESCRIPTION OF PREFERRED EMBODIMENTS

Referring now to the accompanying drawings, preferred embodiments of the invention will be described.

### First Embodiment

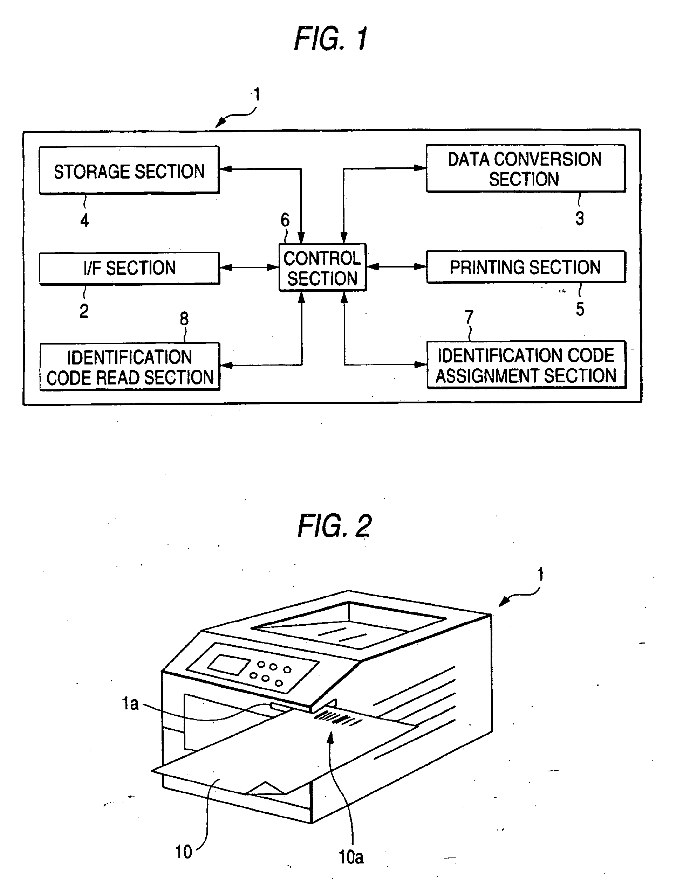

Figure 1 is a schematic block diagram to show an image forming apparatus according to the invention. An image forming apparatus 1 comprises an I/F section 2, a data conversion section 3, a storage section 4, a printing section 5, a control section 6, an identification code assignment section 7, and an identification code read section 8.

The I/F section 2 is connected to a computer or the like, via a cable to receive image data to be printed from the computer.

The data conversion section 3 converts the image data received at the I/F section 2 into data that can be printed in the printing section 5.

The identification code assignment section 7 assigns an identification code in relation with a print image for each page or each print job unit (namely, file unit). The information contained in the identification code may be the serial number of the image forming apparatus 1, the serial number of the document, a password, etc. These information pieces may be compressed, encoded, and assigned as a bar code, for example.

The storage section 4 is a section for storing programs required for controlling the entire image forming apparatus 1, font data required for the data conversion section 3, print images printed in the printing section 5, and identification codes in a one-to-one correspondence with print images for each page unit or print job unit, assigned by the identification code assignment section 7.

The printing section 5 prints the data provided by the data conversion section 3 on a recording medium, and also prints the identification code assigned by the identification code assignment section 7 on the recording medium at the same time.

The control section 6 is a section for controlling the entire image forming apparatus 1.

The identification code read section 8 reads the identification code printed on a recording medium; it may be a bar-code reader if the identification code is indicated like a bar code.

According to the invention, a print image and an identification code are printed-on a recording medium and at the same time, and they are also stored in the storage section 4. Thus, if it becomes necessary to again print, the identification code printed on the recording medium is simply read through the identification code read section 8, whereby the print image can be taken out from the storage section 4 and can be printed any number of times.

Specifically, the identification code may be printed as following manners: (Which print manner is adopted may be previously specified or the image forming apparatus may be provided with selection means for selecting any one of the print methods or a combination thereof.)
(1) Identification codes are printed on all pages of a recording medium to be printed.
   Then, only pages to be printed can be printed promptly.
(2) Identification code is printed only on the first page of a recording medium to be printed.
   Then, the identification code is not printed on the second page or the later pages. In case of the identification code is assigned for each print job units, the second and later pages become unnecessary inevitably.
(3) Identification code is printed on the next page to the last page of a recording medium to be printed. That is, in case of 2-page printing, the identification code is printed on the third page.
   Then, the identification code is not printed on the recording medium on which a print image is printed.
(4) Identification code is printed on the back face of a recording medium to be printed.
   Then, the identification code is not printed on the front face of the print medium.
(5) In case of the identification code being read through the identification code read section 8 for printing, only print images are printed on a recording medium.
   Then, it is determined that the print with the identification code is the original and that the print with no identification code is a duplicate made by reading the identification code through the identification code read section 8.
(6) In case of the identification code being read through the identification code read section 8 for printing, both of a print image and identification code are printed on a recording medium.
   Then, every recording medium of print can be read through the identification code read section 8.

If the image forming apparatus of the invention is provided with network control means capable of also accessing other external machines and read and output means capable of reading and outputting print images of other units, documents of other image forming apparatus can also be drawn out and print images can be shared because the serial number of each image forming apparatus is contained in the identification code. If at least the serial number is printed in an alphanumeric character string, etc., and the correspondence between the alphanumeric strings as the serial numbers and the image forming apparatus is indicated, which image forming apparatus the print document is printed at is known and if the identification code is read through the identification code read section 8 of the image forming apparatus, the document can be printed promptly.

If the image forming apparatus is connected to a host computer, etc., and is provided with means that can respond to search, retrieval, and output instructions from the host computer, etc., the host computer can manage files and list the stored print image contents.

If the image forming apparatus is provided with means that can respond to setting of copy protect from the host computer, etc., the security of print images can be maintained.

Further, a specific configuration of the image forming apparatus which prints bar codes as identification codes will be discussed.

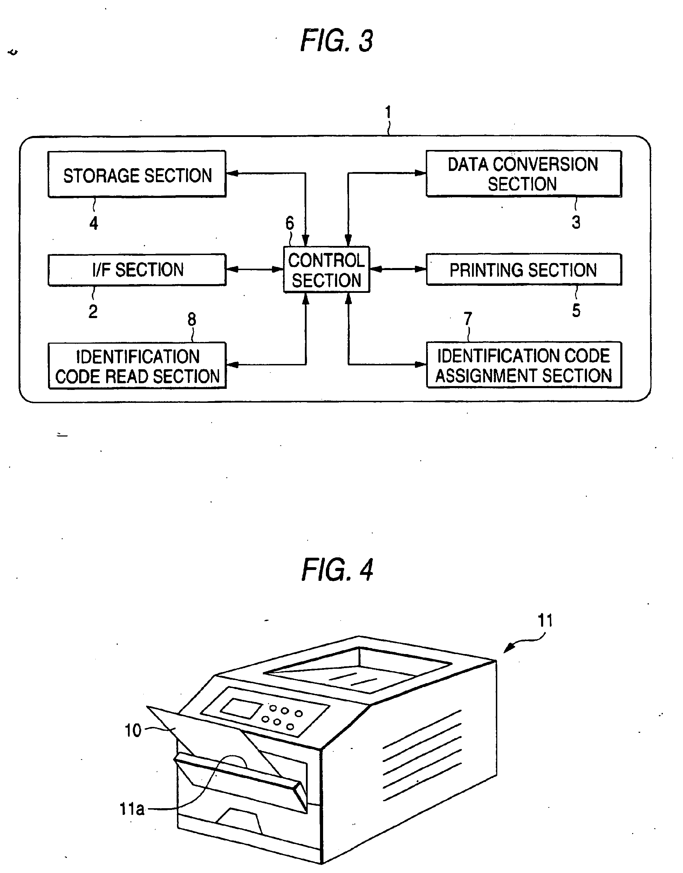

Figures 2 and 3 are reference drawings to explain a printer according to a first embodiment of the image forming apparatus of the invention.

Figure 2 is a perspective view of a printer 1. The printer 1 comprises the main components of an I/F section (interface section) 2, a data conversion section 3, a storage section 4, a printing section 5, a control section 6, an identification code assignment section 7, and an identification code read section 8, as shown in Figure 3.

The identification code read section 8 is a section for reading an identification code printed on recording paper 10; it may be made of a bar-code reader if the identification code is a code like a bar code 10a. In the first embodiment, such a bar-code reader is placed facing the inside of a slit 1a made in a part of the outside of the printer, 1, as shown in Figure 2. The recording paper 10 is passed through the slit 1a, whereby the bar-code reader can read the bar code 10a printed on the recording paper 10.

By the way, the bar-code reader is a sensor for executing photoelectric conversion of the bar code 10a and reading the conversion result. On general photoelectric conversion principles of such a bar-code reader, a bar code is irradiated with laser light, infrared light, etc., and the sensor reads the reflected light from the bar code, executes photoelectric conversion, and determines the bar code contents electrically.

The following read systems using such photoelectric conversion are available:

### (a) Optical scanning system

A system for scanning a narrowed light source over a bar code and reading the reflected light from the bar code by a sensor. It includes laser scanning, flying spot, etc., for example.

### (b) Self-scanning sensor system

A system using a self-scanning sensor having a large number of pixels to read bar codes. It includes CCDs, a photodiode array, etc., for example.

### (c) Mechanical scanning system

A system for moving a carriage on which a light source and a photo sensor are mounted, thereby reading bar codes.

For example, the following are actually used as the read systems:
(1) Flat bed scanner
(2) Original bed move scanner
(3) Drum scanner
(4) Bar code move scanner
(5) Camera scanner
(6) Manual scanner

The system for moving the bar code 10a (recording paper 10), irradiating the bar code 10a with laser light, etc., and reading the reflected light from the bar code, the camera system using CCDs, etc., to read the whole bar code 10a in batch, etc., can be used as the bar-code reader in the first embodiment; any of the above-mentioned systems may be used as the read system and in this point, the same also applies to the following embodiments.

The printer 1 according to the first embodiment can print any number of times simply by passing the recording paper 10 through the slit 1a, thus can print not via an external machine; printing is enabled in a short time and the operability of the printer 1 can be improved remarkably.

### Second Embodiment

Figure 4 is an illustration to show a printer 11 according to a second embodiment of the invention. The second embodiment differs from the first embodiment in that a bar-code reader (identification code read section 8) is disposed in a part of a feed passage of recording paper 10 fed from a manual paper feed section 11a in the second embodiment.

In the printer 11, the recording paper 10 is fed into the manual paper feed section 11a, whereby the bar-code reader reads a bar code 10a and the print image corresponding to the read bar code can be taken out from a storage section 4 and again printed.

According to the second embodiment of the configuration, printing is enabled not via an external machine, thus the printer 11 can print in a short time and the operability of the printer 11 can be improved remarkably.

In the second embodiment, the system for moving the bar code 10a, irradiating the bar code 10a with laser light, etc., and reading the reflected light from the bar code, the camera system using CCDs, etc., or the like can be used as the bar-code reader as in the first embodiment; any other read system may be used as described above if it can be applied.

### Third Embodiment

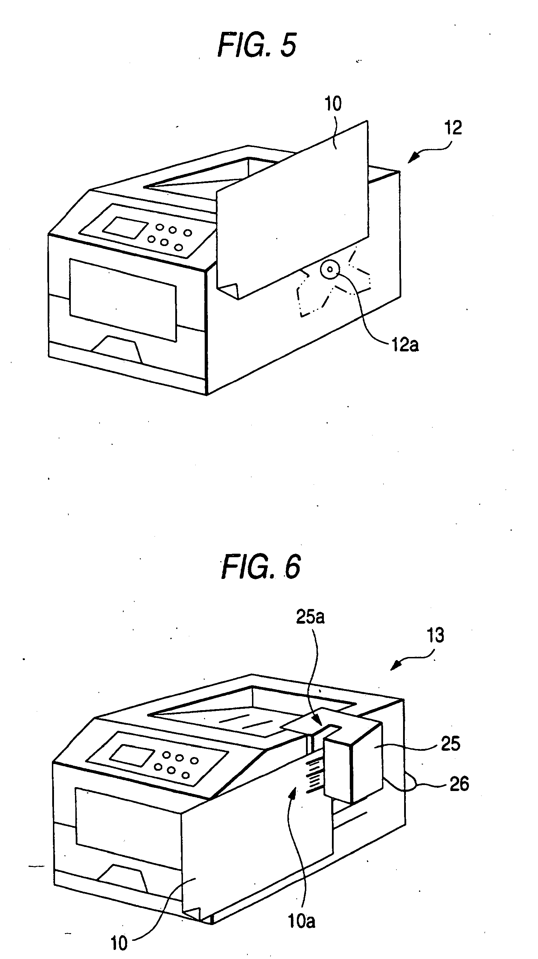

Figure 5 is an illustration to show a printer 12 according to a third embodiment of the invention. In the third embodiment, a bar-code reader 12a (identification code read section 8) is disposed in a part of the outside of the printer 12 and a bar code 10a of recording paper 10 is made to approach so as to cover the bar-code reader 12a, whereby the bar-code reader 12a reads the bar code 10a and the print image corresponding to the bar code 10a can be again printed.

According to the third embodiment of the configuration, printing is enabled not via an external machine, thus the printer 12 can print in a short time and the operability of the printer 12 can be improved remarkably.

In the third embodiment, the camera system can be used as the bar-code reader 12a; any other read system may be used as described above if it can be applied.

### Fourth Embodiment

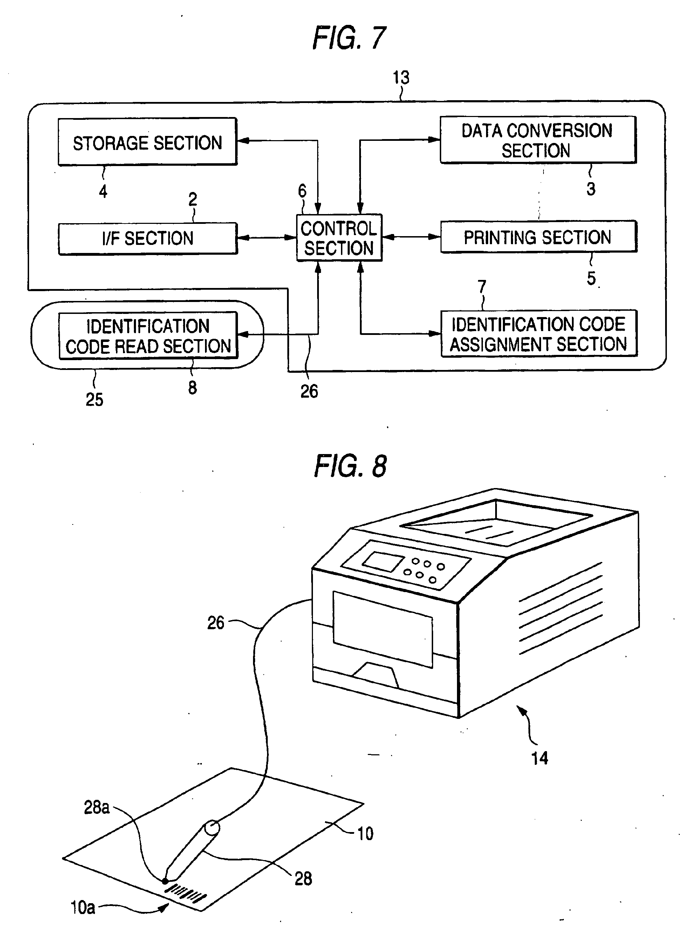

Figures 6 and 7 are drawings to show a printer 13 according to a fourth embodiment of the invention. In the first to third embodiments, the identification code read section 8 is integral with the printer 1, 11, 12. In contrast, in the fourth embodiment, a bar-code reader 25 (identification code read section 8) is separately disposed on the outside of the printer 13, is connected to the printer 13 via wiring 26, and is formed with a slit 25a through which recording paper 10 on which a bar code 10a to be read is printed is passed.

According to the fourth embodiment of the configuration, printing is enabled not via an external machine, thus the printer 13 can print in a short time and the operability of the printer 13 can be improved remarkably.

In the fourth embodiment, the system for moving the bar coded 10a or the camera system can be used as the bar-code reader 25; any other read system may be used as described above if it can be applied.

### Fifth Embodiment

Figure 8 is an illustration to show a printer 14 according to a fifth embodiment of the invention. In the fifth embodiment, a pen holder (pen member) 28 provided at a tip with a bar-code reader 28a (identification code read section 8) is connected to the printer 14 via wiring 26.

According to the fifth embodiment, the pen holder 28 containing the bar-code reader 28a is slid on a bar code 10a of recording paper 10 in a direction perpendicular to the line of the bar code 10a, whereby the bar code 10a can be read from end to end in order and the print image corresponding to the bar code 10a can be printed again.

Thus, according to the fifth embodiment; printing is enabled not via an external machine, so that the printer 14 can print in a short time and the operability of the printer 14 can be improved remarkably.

In the fifth embodiment, a manual scanning system (manual scanner) for the user to hold the pen holder 28 and scan over the bar code 10a by the bar code reader 28a is used; any other read system may be used as described above if it can be applied.

### Sixth Embodiment

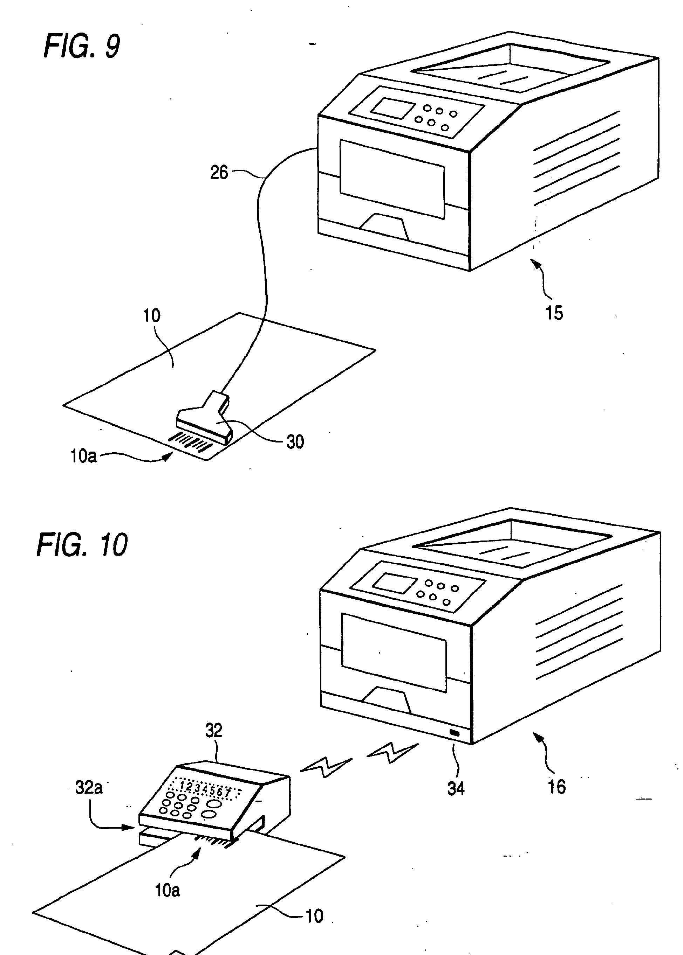

Figure 9 is an illustration to show a printer 15 according to a sixth embodiment of the invention. In the sixth embodiment, a bar-code reader 30 (identification code read section 8) is connected to the printer 15 via wiring 26. According to the sixth embodiment, the bar-code reader 30 is slid on a bar code 10a of recording paper 10 in the length direction of the line of the bar code 10a, whereby the bar code 10a can be read in batch and the print image corresponding to the bar code 10a can be printed again.

Thus, according to the sixth embodiment, printing is enabled not via an external machine, so that the printer 15 can print in a short time and the operability of the printer 15 can be improved remarkably.

In the sixth embodiment, a system for scanning infrared light, etc., over the bar code 10a or the camera system can be used as the bar-code reader 30; any other read system may be used as described above if it can be applied.

### Seventh Embodiment

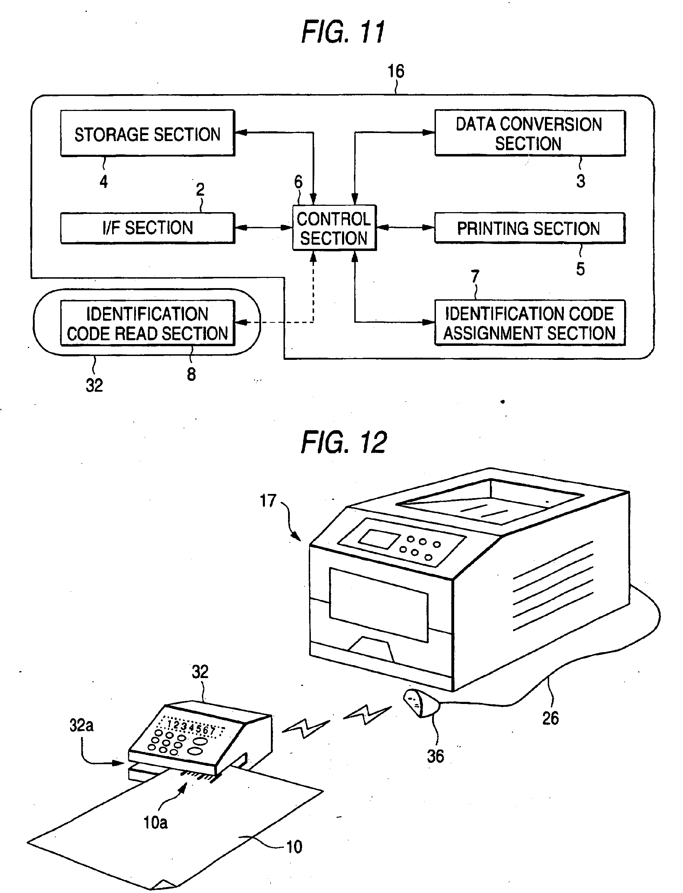

Figures 10 and 11 are drawings to show a printer 16 according to a seventh embodiment of the invention. A bar-code reader 32 used with the printer 16 has a slit 32a through which recording paper 10 is passed to read a bar code 10a, but is not connected to the printer 16 via wiring 26, etc.,; a read signal of the bar code 10a is input to the printer 16 via an internal antenna 34, etc., of the printer 16 as a radio signal.

According to the seventh embodiment of the configuration, printing is enabled not via an external machine, thus the printer 16 can print in a short time and the operability of the printer 16 can be improved remarkably.

In the seventh embodiment, the system for moving the bar code 10a or the camera system can be used as the bar-code reader 30; any other read system may be used as described above if it can be applied.

### Eighth Embodiment

Figure 12 is an illustration to show a printer 17 according to an eighth embodiment of the invention. The eighth embodiment differs from the seventh embodiment in that an external receiver 36 connected to the printer 17 via wiring 26 receives a radio signal from a bar-code reader 32 in the eighth embodiment; whereas, the signal of the bar code 10a is input via the internal antenna 34, etc., of the printer 16 as a radio signal from the bar-code reader 32 in the seventh embodiment.

In the embodiments, the recording paper 10, namely, paper is used as a flexible sheet material. However, any sheet material other than paper, such as a plastic sheet material, can also be used if it is a flexible and sturdy material like a sheet.

## Claims

1. An image forming apparatus for printing image data from an external device, comprising:
- an identification code assignment section (7) for assigning a respective identification code (10a) for each page unit of print images to be printed, wherein the identification code (10a) contains a serial number of the print images;
- a printing section (5) for printing the print images and a corresponding identification code (10a) on a recording medium (10) for each page of the print images, wherein the corresponding identification code (10a) is printed on all pages of the recording medium (10):
- a storage section (4) for storing the print images and corresponding identification codes (10a);
- an identification code read section (8) adapted to read the identification code (10a) printed on the recording medium (10);
- accessing means for taking out the print image corresponding to the identification code (10a) read through the identification code read section (8) from the storage section (4), and for directing the print image and the identification code (10a) which are to be printed on an identical recording medium to the printing section (5);
- network control means capable of accessing another image forming apparatus; and
- read and output means capable of reading and outputting the print images stored in the other image forming apparatus, wherein the identification code (10a) contains a serial number of the image forming apparatus, and wherein a print image stored in the other image forming apparatus is read and printed when the serial number of the other image forming apparatus is contained in the identification code (10a).

2. The apparatus according to claim 1,
wherein the identification code (10a) is printed on a backface of each page of a recording medium (10) to be printed.

## Patentansprüche

1. Bilderzeugungsvorrichtung zum Drucken von Bilddaten von einer externen Einrichtung, die folgendes aufweist:
- eine Identifizierungscode-Zuordnungseinheit (7), um einen jeweiligen Identifizierungscode (10a) für jede Seiteneinheit von zu druckenden Druckbildern zuzuordnen, wobei der Identifizierungscode (10a) eine Seriennummer für die Druckbilder enthält;
- eine Druckeinheit (5), um die Druckbilder und einen entsprechenden Identifizierungscode (10a) auf ein Aufzeichnungsmedium (10) für jede Seite von den Druckbildern zu drucken, wobei der entsprechende Identifizierungscode (10a) auf sämtliche Seiten des Aufzeichnungsmediums (10) gedruckt wird;
- eine Speichereinheit (4), um die Druckbilder und entsprechende Identifizierungscodes (10a) zu speichern;
- eine Identifizierungscode-Leseeinheit (8), die dazu ausgelegt ist, den Identifizierungscode (10a) zu lesen, der auf das Aufzeichnungsmedium (10) gedruckt ist;
- eine Zugriffseinrichtung, um die Druckbilder, die dem Identifizierungscode (10a) entsprechen, der von der Identifizierungscode-Leseeinheit (8) gelesen worden ist, aus der Speichereinheit (4) zu entnehmen und um die Druckbilder und den Identifizierungscode (10a), die auf ein identisches Aufzeichnungsmedium zu drucken sind, der Druckeinheit (5) zuzuleiten;
- eine Netzwerk-Steuereinrichtung, die in der Lage ist, zu einer anderen Bilderzeugungsvorrichtung Zugriff zu nehmen; und
- eine Lese- und Ausgabeeinrichtung, die in der Lage ist, die gedruckten Bilder, die in der anderen Bilderzeugungsvorrichtung gespeichert sind, zu lesen und auszugeben, wobei der Identifizierungscode (10a) eine Seriennummer der Bilderzeugungsvorrichtung enthält, und wobei ein Druckbild, das in der anderen Bilderzeugungsvorrichtung gespeichert ist, ausgelesen und gedruckt wird, wenn die Seriennummer der anderen Bilderzeugungsvorrichtung in dem Identifizierungscode (10a) enthalten ist.

2. Vorrichtung nach Anspruch 1,
wobei der Identifizierungscode (10a) auf eine Rückseite von jedem Blatt eines zu bedruckenden Aufzeichnungsmediums (10) gedruckt ist.

## Revendications

1. Appareil de formation d'images servant à imprimer des données d'image à partir d'un dispositif externe, comprenant :
- une section (7) d'affectation de code d'identification servant à affecter un code d'identification (10a) respectif pour chaque unité de page d'images d'impression à imprimer, où le code d'identification (10a) contient un numéro de série des images d'impression ;
- une section d'impression (5) servant à imprimer les images d'impression et un code d'identification correspondant (10a) sur un support d'enregistrement (10), pour chaque page des images d'impression, où le code d'identification correspondant (10a) est imprimé sur toutes les pages du support d'enregistrement (10) ;
- une section de stockage (4) servant à stocker les images d'impression et les codes d'identification correspondants (10a),
- une section (8) de lecture de code d'identification destinée à lire le code d'identification (10a) imprimé sur le support d'enregistrement (10) ;
- un moyen d'accès servant à extraire, de la section de stockage (4), l'image d'impression correspondant au code d'identification (10a) lu dans la section (8) de lecture de code d'identification et à diriger sur la section d'impression (5) l'image d'impression et le code d'identification (10a) qui doivent être imprimés sur un support d'enregistrement identique ;
- un moyen de commande de réseau pouvant faire accès à un autre appareil de formation d'images ; et
- un moyen de lecture et de délivrance pouvant lire et délivrer des images d'impression stockées dans l'autre appareil de formation d'images, où le code d'identification (10a) contient le numéro de série de l'appareil de formation d'images, et où une image d'impression stockée dans l'autre appareil de formation d'images est lue et imprimée lorsque le numéro de série de l'autre appareil de formation d'image est contenu dans le code d'identification (10a).

2. Appareil selon la revendication 1,
où le code d'identification (10a) est imprimé sur le verseau de chaque page d'un support d'enregistrement (10) à imprimer.
